# EUROPÄISCHE PATENTSCHRIFT

(11) **EP 1 735 172 B1**
(45) Veröffentlichungstag und Bekanntmachung des Hinweises auf die Patenterteilung: **08.07.2009**
(21) Anmeldenummer: 04803606.5
(22) Anmeldetag: 08.12.2004
(51) Int. Cl.: B60K 6/48, F02B 75/06, F02D 31/00, F02P 5/15

(54) **VERFAHREN ZUM BETRIEBEN EINES HYBRID-KRAFTFAHRZEUGS**
METHOD FOR OPERATING A HYBRID MOTOR VEHICLE
PROCEDE POUR FAIRE FONCTIONNER UN VEHICULE AUTOMOBILE HYBRIDE

(30) Priorität: 03.04.2004 DE 102004016559
(43) Veröffentlichungstag der Anmeldung: 27.12.2006
(73) Patentinhaber: Volkswagen Aktiengesellschaft, 38436 Wolfsburg (DE); Skoda Auto a.s., 293 60 Mlada Boleslav (CZ)
(72) Erfinder: ZILLMER, Michael, 38173 Sickte (DE); HOLZ, Matthias, 38165 Lehre (DE); POTT, Ekkehard, 38518 Gifhorn (DE); PROCHAZKA, David, 50745 Libosovice (CZ)
(86) Internationale Anmeldenummer: PCT/EP2004/013925
(87) Internationale Veröffentlichungsnummer: WO 2005/105500

(56) Entgegenhaltungen:
- EP-A- 1 380 745
- DE-A1- 10 024 704
- DE-A1- 10 241 018
- DE-A1- 19 709 134

## Beschreibung

Die Erfindung betrifft ein Verfahren zum Betreiben eines Hybrid-Kraftfahrzeugs mit einer Brennkraftmaschine und wenigstens einer elektrischen Maschine, wobei wenigstens eine der elektrischen Maschinen die Brennkraftmaschine im Leerlauf mit einem variierenden Drehmoment derart beaufschlagt, dass Drehungleichförmigkeiten der Brennkraftmaschine im Leerlauf verringert werden, gemäß dem Oberbegriff des Patentanspruchs 1.

Während des Betriebes eines Kraftfahrzeuges mit Brennkraftmaschine wird die Brennkraftmaschine in den Stillstandsphasen des Kraftfahrzeuges in der Regel nicht abgestellt und läuft im Leerlaufbetrieb weiter. Ein Teil der hier vom Motor abgegebenen Energie wird für die Versorgung des Fahrzeug-Bordnetzes beziehungsweise für Komfortfunktionen, wie beispielsweise die Klimaanlage, genutzt. Da der Motor im Leerlaufbetrieb jedoch den größten Anteil der in der eingebrachten Kraftstoffmenge enthaltenen Energie für die Aufrechterhaltung des Motorlaufes beziehungsweise zur Kompensation von Wärme- und Reibungsverlusten benötigt und zusätzlich in einem Bereich thermodynamisch schlechter Wirkungsgrade läuft, ist es energetisch ungünstig, den Motor bei einem Stillstand des Fahrzeuges weiterlaufen zu lassen. Aus diesem Grunde gibt es bereits Fahrzeuge mit Start-Stop-Funktion, die die Brennkraftmaschine bei einem Fahrzeugstillstand zur Absenkung des Kraftstoffverbrauches abstellen.

Auch bei Hybridfahrzeugen wird der Verbrennungsmotor in Stillstandsphasen über eine Start-Stop-Funktion typischerweise abgestellt. Dabei ist hier von Vorteil, dass Hybridfahrzeuge über im Vergleich zu einem konventionellen Anlasser deutlich leistungsstärkere Elektromotoren verfügen, was einen höheren Komfort insbesondere bei Motorstart ermöglicht. Die Anbindung der elektrischen Maschine an die Motorkurbelwelle kann auf verschiedene Arten erfolgen. So kann diese über eine Kupplung beziehungsweise direkt mit der Kurbelwelle des Motors verbunden oder über einen Riementrieb beziehungsweise ein Getriebe angekoppelt sein. Die Versorgung der elektrischen Verbraucher erfolgt in den Stillstandsphasen über Batterien oder andere elektrische Energiespeicher, welche in einem anschließenden Fahrbetrieb in wirkungsgradgünstigeren Betriebspunkten der Brennkraftmaschine wieder aufgeladen werden. Auf diese Weise kann eine merkliche Reduzierung des Kraftstoffverbrauches erzielt werden.

Es gibt jedoch Betriebsphasen, bei denen ein Abstellen der Brennkraftmaschine aus anderen Gründen nicht zugelassen werden kann. So kann beispielsweise bei eingeschalteter Klimaanlage der über den Riementrieb der Brennkraftmaschine erfolgende mechanische Antrieb eines Klimakompressor den Weiterlauf der Brennkraftmaschine erfordern. Auch bei geringeren Ladezuständen der Batterien kann es insbesondere bei sehr langen Stillstandsphasen erforderlich sein, die Brennkraftmaschine im Leerlauf weiterlaufen zu lassen beziehungsweise wieder zu starten. Darüber hinaus muss beispielsweise die Abgasreinigungsanlage ihre Betriebstemperatur erreicht haben, damit beim Wiederstart der Brennkraftmaschine keine unzulässig hohen Abgasschadstoffemissionen entstehen. Aus den oben genannten Gründen kann es also auch bei Hybridsystemen erforderlich sein, die Brennkraftmaschine bei Fahrzeugstillstand im Leerlauf zu betreiben. Gerade bei diesen Konzepten ist es aber erforderlich, den Leerlaufverbrauch so gering wie möglich zu halten.

Eine Möglichkeit der Verringerung des Kraftstoffverbrauchs im Leerlauf besteht darin, die Leerlaufdrehzahl der Brennkraftmaschine möglichst weit abzusenken. Bei Brennkraftmaschinen kann die Leerlaufdrehzahl jedoch nur bis auf einen bestimmten Wert abgesenkt werden, da ansonsten die Unregelmäßigkeiten bei der Momentenabgabe einzelner Zylinder erheblich zunehmen, so dass die Laufqualität sehr schlecht wird beziehungsweise der Motor ausgeht. Der Motorlauf wird hierbei erschwert durch Streuungen bei der eingespritzten Kraftstoffmasse zwischen einzelnen Zylindern, die geringen Zylinderfüllungen, die geringe Intensität der Brennraumgasströmungen sowie erhöhte Restgasgehalte in den Brennräumen. Diese Faktoren führen dazu, dass sich bei Absenkung der Leerlaufdrehzahl zunehmend stochastisch mangelhafte Verbrennungsereignisse einstellen, die zu einem kurzfristigen, Komfort beeinträchtigeriden Einbruch der Leerlaufdrehzahl führen.

Bei 3-und 4-Zylindermotoren liegen die Leerlaufdrehzahlen deshalb typischerweise in einem Bereich von 750 bis 900 min⁻¹. Bei direkteinspritzenden Ottomotoren kann die Leerlaufdrehzahl gegenüber saugrohreinspritzenden Motoren geringer eingestellt werden, da auf Grund der direkten Einbringung des Kraftstoffes in den Brennraum eine sehr genaue Zumessung der Einspritzmenge auf die einzelnen Zylindern möglich ist. Bei hochzylindrigen kann die Leerlaufdrehzahl auf Grund der höheren Anzahl der Verbrennungsereignisse pro Kurbelwellenumdrehung ebenfalls noch etwas geringer eingestellt werden.

Ein weiteres Problem stellen die direkt an eine Leerlaufphase anschließenden Last-beziehungsweise Momentenanforderungen dar. Beispielsweise wird bei einem Anfahrvorgang schlagartig ein deutlich höheres Moment gefordert. Da der Füllungsaufbau im Saugrohr jedoch eine endliche Zeit in Anspruch nimmt (mehrere 100 ms), kann dies bei einem Motor, dessen Leerlaufdrehzahl im unbelasteten Zustand auf den geringst möglichen Wert abgesenkt wurde, zu einem Momenteneinbruch und in Kombination mit einem Einkuppelvorgang auch zu einem unerwünschten Drehzahleinbruch führen, was erhebliche Komforteinbußen bedeutet. Ein ähnlich unerwünschter Effekt kann sich beispielsweise auch bei der Aufschaltung eines Verbrauchers, beispielsweise des Klimakompressors, im Leerlauf einstellen.

Aus diesem Grund wird die Leerlaufdrehzahl bei-Serlenmotoren mit einem bestimmten Abstand zu einer unteren beziehungsweise minimalen, vorbestimmten Leerlaufgrenzdrehzahl eingestellt. Zusätzlich werden häufig so genannte Momentenreserven verwendet. Dabei wird bei einem Ottomotor der Zündwinkel später als für den momenten- beziehungsweise verbrauchsoptimalen Betrieb erforderlich eingestellt. Um die Soll-Leerlaufdrehzahl halten zu können, muss gleichzeitig die Zylinderfüllung erhöht werden. Bei einer schnellen Lastanforderung kann jetzt zunächst zur Mömentenerhöhung der Zündwinkel verfrüht werden, was praktisch ohne zeitliche Verzögerung zu einem höheren Moment führt, da der Zündwinkel sehr schnell, das heißt schon beim darauf folgenden Arbeitsspiel verstellt werden kann. Sowohl der Sicherheitsabstand der Leerlaufdrehzahl von der minimalen Leerlaufgrenzdrehzahl als auch die Momentenreserve führen jedoch in unerwünschter Weise zu einer Erhöhung des Kraftstoffverbrauches.

Aus der DE 197 09 134 A1, die den Oberbegriff des Anspruchs 1 definiert, ist ein Antriebssystem für ein Hybrid-Kraftfahrzeug mit einem Verbrennungsmotor und einer elektrischen Maschine, die den Verbrennungsmotor mit einem variierenden Drehmoment beaufschlagt, bekannt, so dass Drehungleichförmigkeiten des Verbrennungsmotors verringert werden. Die mit dem Verbrennungsmotor gekoppelte elektrische Maschine wird dabei derart gesteuert, dass sie ein den Drehmomentschwankungen des Verbrennungsmotors entgegenwirkendes variierendendes Drehmoment aufbringt. Hierbei wird die mittlere Leerlaufdrehzahl durch globale Absenkung auf einen verringerten Wert abgesenkt.

Aus der EP 1 380 745 A2 ist es bekannt, dass durch eine geeignete Umschaltungssteuerung zwischen homogener Ladung und Schichtladung durch das Fehlen einer Drehmomentreserve unter entsprechender Zündwinkelverschlechterung stets mit einem optimalen Zündwinkel gefahren werden kann.

Der Erfindung liegt die Aufgabe zugrunde, bei einem Betrieb eines Hybridfahrzeugs den Leerlaufverbrauch des Hybridsystems abzusenken, das Zusammenspiel von Brennkraftmaschine und elektrischer Maschine zu verbessern und gleichzeitig einen gewünschten Fahrkomfort aufrechtzuerhalten.

Diese Aufgabe wird erfindungsgemäß durch ein Verfahren der o.g. Art mit den in Anspruch 1 gekennzeichneten Merkmalen gelöst. Vorteilhafte Ausgestaltungen der Erfindung sind in den weiteren Ansprüchen beschrieben.

Dazu ist es bei einem Verfahren der o.g. Art erfindungsgemäß vorgesehen, dass gleichzeitig im Leerlauf die Brennkraftmaschine mit für diesen Betriebszustand optimiertem Zündwinkel und Füllungsgrad betrieben wird, wobei auf eine Momentenreserve infolge einer Spätverstellung des Zündwinkels verzichtet wird, und dass bei einem Anfahrvorgang aus dem Leerlauf von wenigstens einer der elektrischen Maschinen ein Anfahr-Drehmoment zur Verfügung gestellt wird, das in der Zeit des Füllungsaufbaus der Brennkraftmaschine aufgeprägt wird.

Dies hat den Vorteil, dass durch Verzicht auf die sonst übliche Spätverstellung des Zündwinkels und die damit verbundene Anhebung des Füllungsgrades eine äußerst niedrige Leerlaufdrehzahl gewählt werden kann, wodurch eine Reduzierung des Kraftstoffverbrauchs bei gleichzeitiger Beibehaltung des gewünschten Betriebs- und Fahrkomforts erzielt wird.

Zweckmäßigerweise wird der Zündwinkel im Leerlauf für einen verbrauchsoptimalen Betrieb der Brennkraftmaschine eingestellt.

Bevorzugt wird die Brennkraftmaschine im Leerlauf mit Lambda gleich 1 betrieben.

In einer bevorzugten Ausführungsform wird im Leerlauf eine Drehzahlregelung durch Eingriffe über einen Zündpfad, einen Kraftstoffpfad und/oder einem Füllungspfad mit einer Drehzahlregelung mittels wenigstens einer der elektrischen Maschinen kombiniert.

In einer weiteren bevorzugten Ausführungsform wird eine Drehzahlregelung mittels wenigstens einer der elektrischen Maschinen der herkömmlichen Drehzahlregelung über einen Zündpfad, einen Kraftstoffpfad und/oder einem Füllungspfad überlagert, wobei die Drehzahlregelung mittels wenigstens einer der elektrischen Maschinen vorzugsweise nur auf stochastische, stärkere Drehzahleinbrüche reagiert.

Zweckmäßigerweise wird die Leerlaufdrehzahl der Brennkraftmaschine um wenigstens 50 min⁻¹, insbesondere wenigstens um 100 min⁻¹, insbesondere wenigstens um 200 min⁻¹ abgesenkt.

Die Erfindung wird im folgenden näher erläutert.

Bei einem Hybridfahrzeuge mit zusätzlich wenigstens einer elektrischen Maschine und einer Brennkraftmaschine ist es erfindungsgemäß vorgesehen, den Leerlaufverbrauch sowie den Leerlaufkomfort zu verbessern. Da die elektrische Maschine gerade im unteren Drehzahlbereich ein hohes Drehmoment (positiv und negativ) bereitstellen kann, bietet sich hiermit die Möglichkeit, den Leerlauf einer Brennkraftmaschine vorteilhaft zu unterstützen. Darüber hinaus können die elektromotorischen Momente sehr schnell, das heißt innerhalb einiger 10 ms, auf- und abgebaut werden, wodurch sich die Möglichkeit ergibt, die Momentenschwankungen beziehungsweise die sich daraus ergebenden Drehzahlschwankungen einer Brennkraftmaschine im Leerlauf auszugleichen.

Erfindungsgemäß wird daher vorgeschlagen, die Leerlaufdrehzahl einer Brennkraftmaschine gegenüber der ursprünglichen Auslegung um mindestens 50 min⁻¹, bevorzugt um mindestens 100 min⁻¹ und besonders bevorzugt um mindestens 200 min⁻¹ abzusenken. Die Momentenungleichförmigkeiten beziehungsweise die resultierenden Drehzahlschwankungen werden hierbei über eine kombinierte Drehzahlregelung von Verbrennungsmotor und elektrischer Maschine ausgeglichen. Alternativ ist eine Kombination der konventionellen Drehzahlregelung des Verbrennungsmotors mit einer überlagerten Drehzahlregelungen der elektrischen Maschine denkbar, die auf Drehzahleinbrüche durch stochastisch mangelhafte Verbrennungsereignisse reagiert und somit unzulässige Drehzahleinbrüche verhindert. In einer besonders vorteilhaften Ausgestaltung der Erfindung wird vorgeschlagen, zusätzlich die konventionelle Momentenreserve (Zündwinkelvorhalt) nicht mehr zu verwenden. Durch das hohe Antriebsmoment der elektrischen Maschine kann zusätzlich der Anfahrvorgang aus einem Niedrigstleerlauf mit nur geringer beziehungsweise ohne Momentenreserve unterstützt werden, so dass auch hier keine Komforteinbußen durch Drehzahleinbrüche entstehen.

Das vorgeschlagene Verfahren ermöglicht somit eine weitere Absenkung des Kraftstoffverbrauchs von Hybrid-Fahrzeugen beziehungsweise Antriebskonzepten mit Kombination von Brennkraftmaschine und elektrischer Maschine.

## Patentansprüche

1. Verfahren zum Betreiben eines Hybrid-Kraftfahrzeugs mit einer Brennkraftmaschine und wenigstens einer elektrischen Maschine, wobei wenigstens eine der elektrischen Maschinen die Brennkraftmaschine im Leerlauf mit einem variierenden Drehmoment derart beaufschlagt, dass Drehungleichförmigkeiten der Brennkraftmaschine im Leerlauf verringert werden, und eine Leerlaufdrehzahl der Brennkraftmaschine ausgehend von einer für die Brennkraftmaschine vorbestimmten Leerlaufgrerizdrehzahl abgesenkt wird, bei der die Brennkraftmaschine einen ruhigen Leerlauf und ausreichend Reserven für einen Anfahrvorgang ohne Drehzahleinbrüche aufweist, **dadurch gekennzeichnet, dass** gleichzeitig im Leerlauf die Brennkraftmaschine mit für diesen Betriebszustand optimiertem Zündwinkel und Füllungsgrad betrieben wird, wobei auf eine Momentenreserve infolge einer Spätverstellung des Zündwinkels verzichtet wird, und dass bei einem Anfahrvorgang aus dem Leerlauf von wenigstens einer der elektrischen Maschinen ein Anfahr-Drehmoment zur Verfügung gestellt wird, das in der Zeit des Füllungsaufbaus der Brennkraftmaschine aufgeprägt wird.

2. Verfahren nach Anspruch 1, **dadurch gekennzeichnet, dass** der Zündwinkel und der Füllungsgrad im Leerlauf für einen verbrauchsoptimalen Betrieb der Brennkraftmaschine im Leerlauf eingestellt wird.

3. Verfahren nach Anspruch 1 oder 2, **dadurch gekennzeichnet, dass** die Brennkraftmaschine im Leerlauf mit Lambda gleich 1 betrieben wird.

4. Verfahren nach wenigstens einem der vorhergehenden Ansprüche, **dadurch gekennzeichnet, dass** im Leerlauf eine Drehzahlregelung durch Eingriffe über einen Zündpfad, einen Kraftstoffpfad und/oder einem Füllungspfad mit einer Drehzahlregelung mittels wenigstens einer der elektrischen Maschinen kombiniert wird.

5. Verfahren nach wenigstens einem der vorhergehenden Ansprüche, **dadurch gekennzeichnet, dass** eine Drehzahlregelung mittels wenigstens einer der elektrischen Maschinen der herkömmlichen Drehzahlregelung über einen Zündpfad, einen Kraftstoffpfad und/oder einem Füllungspfad überlagert wird.

6. Verfahren nach Anspruch 5, **dadurch gekennzeichnet, dass** die Drehzahlregelung mittels wenigstens einer der elektrischen Maschinen nur auf stochastische, stärkere Drehzahleinbrüche reagiert.

7. Verfahren nach wenigstens einem der vorhergehenden Ansprüche, **dadurch gekennzeichnet, dass** die Leerlaufdrehzahl der Brennkraftmaschine um wenigstens 50 min⁻¹, insbesondere wenigstens um 100 min⁻¹, insbesondere wenigstens um 200 min⁻¹ abgesenkt wird.

## Claims

1. Method for operating a hybrid motor vehicle having an internal combustion engine and at least one electric machine, wherein at least one of the electric machines applies a varying torque to the internal combustion engine in the idling mode, such that rotational irregularities of the internal combustion engine during idling are reduced and an idling rotational speed of the internal combustion engine is lowered starting from an idling limiting rotational speed which is predetermined for the internal combustion engine and at which the internal combustion engine has smooth idling and sufficient reserves for a starting process without dips in rotational speed, **characterized in that** in the idling mode the internal combustion engine is operated simultaneously with both an ignition angle and a filling level which are optimized for this operating state, wherein a torque reserve on the basis of late adjustment of the ignition angle is dispensed with, and **in that** during a starting process from the idling mode of at least one of the electric machines a starting torque is made available which is impressed in the time when the charge is built up by the internal combustion engine.

2. Method according to Claim 1, **characterized in that** the ignition angle and the filling level in the idling mode are set for a consumption-optimized operation of the internal combustion engine in the idling mode.

3. Method according to Claim 1 or 2, **characterized in that** in the idling mode the internal combustion engine is operated at lambda equals 1.

4. Method according to at least one of the preceding claims, **characterized in that** in the idling mode rotational speed control by means of interventions via an ignition path, a fuel path and/or a filling path is combined with rotational speed control by means of at least one of the electric machines.

5. Method according to at least one of the preceding claims **characterized in that** rotational speed control by means of at least one of the electric machines is superimposed on conventional rotational speed control via an ignition path, a fuel path and/or a filling path.

6. Method according to Claim 5, **characterized in that** the rotational speed control by means of at least one of the electric machines reacts only to stochastic, relatively severe dips in rotational speed.

7. Method according to at least one of the preceding claims, **characterized in that** the idling speed of the internal combustion engine is lowered by at least 50 min⁻¹, in particular by at least 100 min⁻¹, in particular by at least 200 min⁻¹.

## Revendications

1. Procédé pour faire fonctionner un véhicule automobile hybride avec un moteur à combustion interne et au moins un moteur électrique, au moins l'un des moteurs électriques sollicitant le moteur à combustion interne au ralenti avec un couple variable de telle sorte que des inégalités de rotation du moteur à combustion interne au ralenti soient réduites, et qu'un régime de ralenti du moteur à combustion interne soit abaissé depuis un régime limite de ralenti prédéfini pour le moteur à combustion interne, auquel le moteur à combustion interne présente un ralenti silencieux et suffisamment de réserves pour une opération de démarrage sans effondrement du régime, **caractérisé en ce que** simultanément au ralenti, le moteur à combustion interne fonctionne avec un angle d'allumage et un degré de remplissage optimisés pour cet état de fonctionnement, une réserve de couple due à un réglage en retard de l'angle d'allumage n'étant pas nécessaire, et **en ce que** dans le cas d'une opération de démarrage à partir du ralenti, l'un des moteurs électriques fournit un couple de démarrage qui est accentué pendant le temps de la réalisation du remplissage du moteur à combustion interne.

2. Procédé selon la revendication 1, **caractérisé en ce que** l'angle d'allumage et le degré de remplissage sont ajustés pour un fonctionnement du moteur à combustion interne au ralenti avec une consommation optimale.

3. Procédé selon la revendication 1 ou 2, **caractérisé en ce que** le moteur à combustion interne fonctionne au ralenti avec une valeur lambda égale à 1.

4. Procédé selon au moins l'une quelconque des revendications précédentes, **caractérisé en ce qu'**au ralenti, un réglage du régime est combiné par des interventions par le biais d'un chemin d'allumage, d'un chemin de carburant et/ou d'un chemin de remplissage, avec un réglage du régime au moyen d'au moins l'un des moteurs électriques.

5. Procédé selon au moins l'une quelconque des revendications précédentes, **caractérisé en ce qu'**un réglage du régime est superposé au moyen d'au moins l'un des moteurs électriques au réglage du régime usuel par le biais d'un chemin d'allumage, d'un chemin de carburant et/ou d'un chemin de remplissage.

6. Procédé selon la revendication 5, **caractérisé en ce que** le réglage du régime au moyen d'au moins l'un des moteurs électriques ne réagit qu'aux effondrements de régime stochastiques relativement importants.

7. Procédé selon au moins l'une quelconque des revendications précédentes, **caractérisé en ce que** le régime de ralenti du moteur à combustion interne est abaissé d'au moins 50 min⁻¹, en particulier d'au moins 100 min⁻¹, notamment d'au moins 200 min⁻¹.
